# EUROPEAN PATENT SPECIFICATION

(11) **EP 3 328 602 B1**
(45) Date of publication and mention of the grant of the patent: **25.08.2021**
(21) Application number: 16760168.1
(22) Date of filing: 28.07.2016
(51) Int. Cl.: B28B 11/04, B28B 15/00, B28B 17/00, G05B 19/418

(54) **LINE AND METHOD FOR THE PRODUCTION OF DECORATED CERAMIC PRODUCTS**
LINIE UND VERFAHREN ZUR HERSTELLUNG VERZIERTER KERAMIKPRODUKTE
CHAÎNE ET PROCÉDÉ DE PRODUCTION DE PRODUITS CÉRAMIQUES DÉCORÉS

(30) Priority: 31.07.2015 IT UB20152720
(43) Date of publication of application: 06.06.2018
(73) Proprietor: Sacmi Cooperativa Meccanici Imola Societa' Cooperativa, 40026 Imola (IT)
(72) Inventor: BOSI, Gildo, 48012 Bagnacavallo (Ravenna) (IT)
(74) Representative: Conti, Marco
(86) International application number: PCT/IB2016/054497
(87) International publication number: WO 2017/021825

(56) References cited:
- CN-A- 104 808 596
- GB-A- 2 390 154

## Description

### Technical field

This invention relates to a line and a method for the production of decorated ceramic products. The invention addresses the technical sector of continuous cycle production lines for making individual ceramic products in succession.

### Background art

Such lines are used, for example, to make decorated ceramic products, in particular tiles or slabs. Examples of such lines or parts of them are described in the following patent documents in the name of the same Applicant as this invention: WO2013/080189, WO2013/050845, EP1356909A2, WO2013/045989. Further examples of such lines or parts of them are described in the following patent documents: EP1334811, EP1981688, WO2014/060858, WO2014/037823.

These production lines comprise a plurality of interconnected machines. Each machine performs a particular stage in the production process according to its own configuration, determined by specifically set parameters.

Each machine therefore has its own local control panel, which is typically mounted on board the machine and by which users can configure the machine. For example, the local control panel comprises a local control unit configured to send at least one control signal to the respective machine to govern and control machine operation.

Normally, these production lines are large in size, particularly in the direction along which the interconnected machines are installed.

One problem with these lines is the fact that it is relatively probable for users to make mistakes in configuring the machines. This depends on the large number of settings necessary and on the fact that the configuration of one machine often affects the configuration of another distant from it.

This need is due essentially to the fact that the procedure by which the machines of the line are configured to produce the desired type of product is lengthy and complicated. A typical procedure entails adjusting different machines one by one.

This makes the production of small batches of products of the same kind economically unfavourable.

The difficulty of identifying the recipe most suitable for making a certain kind of product (where the term "recipe" is used to mean a data set representing settings of the machines which make up the line) also means that manufacturing companies, in particular tile manufacturing companies, are, generally speaking, reluctant to try out new kinds of products.

This has a negative impact on the markets of these manufacturers, for example because some potential customers such as architects, in search of technical solutions which give more scope and freedom to their creativity tend to turn to other products.

Other lines for the production of ceramic products are disclosed in patent documents GB2390154A, which discloses a continuous cycle production line and method for making decorated ceramic products in accordance with the preamble of claim 1 and 10 respectively, and CN104808596A.

### Disclosure of the invention

This invention has for an aim to provide a line and a method for the production of decorated ceramic products to overcome the above mentioned disadvantages of the prior art.

More specifically, the invention has for an aim to provide a line and a method for the production of decorated ceramic products allowing the type of product made by the line to be changed more quickly and easily.

A further aim of the invention is to provide a line and a method for the production of decorated ceramic products making the designing of new types of products particularly convenient.

Yet another aim of the invention is to provide a particularly reliable and easy to run line and method for the production of decorated ceramic products allowing machine configuration to be made easier and quicker. These aims are fully achieved by the line and method according to the invention for the production of decorated ceramic products as characterized in the appended claims.

More specifically, the continuous cycle production line for making decorated ceramic products according to this description comprises a feeding machine configured to deposit ceramic powders on a conveyor according to a deposit pattern. The feeding machine is designed to receive a first drive signal to deposit ceramic powders on a conveyor according to a deposit pattern which is a function of the first drive signal.

The line comprises a pressing machine configured to compact the powders deposited by the feeding machine to make ceramic products having a surface.

The line comprises a colouring machine equipped with print heads connected to an ink circuit. The colouring machine is designed to receive a second drive signal. The colouring machine is configured to apply the ink to the surface of the ceramic product according to a colouring pattern which is a function of the second drive signal.

The line according to the invention comprises a supervision system having a line server and, for each of the machines, namely, feeding machine, pressing machine and colouring machine, comprises:
- a respective local control panel connected to the corresponding machine and configured to generate configuration data representing a machine setup;
- a respective print server connected to a corresponding local control panel to receive the configuration data of the corresponding machine and process it to generate a machine configuration document representing the machine configuration data formatted according to a predetermined protocol.

According to the invention, the line server is connected to all the print servers of the line to receive the configuration documents of the machines of the line. The line server is configured to generate a configuration document of the line, representing a setup of the line in its entirety. Preferably, the print server and the local control panels define distinct devices which can be spaced from one another.

In an example embodiment, the line server is configured to generate a line configuration document which can be read by a graphical design or development program.

In an example embodiment, the line server is configured to receive one or more graphical documents representing an aesthetic aspect of the surface of the ceramic product. Preferably, the line server is configured to generate a drive document representing a recipe, where the recipe comprises a data set representing settings of the machines of the line, in order to make the ceramic product with a line having the aforesaid setup. In an example embodiment, the line server is configured to transmit to the print servers respective machine drive documents representing a recipe subset pertaining to the respective machine. The print servers are designed to receive the machine drive documents to generate corresponding drive signals to be transmitted to the corresponding machine.

Preferably, each print server has its own data storage memory.

In an example embodiment, the line server is configured to enter check data in the line configuration document. In a graphical development and design environment having a plurality of design functions, the check data is used to enable or inhibit one or more of those design functions.

In a further example embodiment, the line server is configured to receive one or more graphical documents representing an aesthetic aspect of the ceramic product. The line server is configured to generate an alert signal based on a comparison between one or more of the aesthetic features of the ceramic product and the line configuration document.

In an example embodiment, the line comprises one or more of the following machines:
- a glazing machine, located between the pressing machine and the colouring machine, designed to receive a third drive signal and configured to deposit liquid material (that is, liquid glaze) on the surface of the ceramic product according to a glazing pattern which is a function of the third drive signal;
- a protective glazing machine, located downstream of the colouring machine, designed to receive a fourth drive signal and configured to apply a protective glaze to the surface of the ceramic product coloured by the colouring machine according to a protective glazing pattern which is a function of the fourth drive signal;
- a powder glaze application machine, located downstream of the colouring machine, designed to receive a fifth drive signal and configured to apply a powder glaze to the surface of the ceramic product coloured by the colouring machine according to a powder glaze depositing pattern which is a function of the fifth drive signal;
- a dryer designed to receive a sixth drive signal and configured to subject the ceramic product to a heat treatment whose temperature profile is a function of the sixth drive signal. Preferably, the dryer is located between the pressing machine and the glazing machine.

In an example embodiment, for each of these one or more machines (that is, glazing machine, protective glazing machine, powder glaze application machine, dryer), the line comprises:
- a respective local control panel connected to the corresponding machine and configured to generate configuration data representing a corresponding machine setup;
- a respective print server, connected to a corresponding local control panel to receive the configuration data of the corresponding machine and process it to generate a machine configuration document representing the machine configuration data formatted according to a predetermined protocol.

Also defined according to this description is a method for the continuous cycle production of decorated ceramic products in a line comprising:
- a feeding machine designed to receive a first drive signal and configured to deposit ceramic powders on a conveyor according to a deposit pattern which is a function of the first drive signal;
- a pressing machine configured to compact the powders deposited by the feeding machine to make ceramic products having a surface;
- a colouring machine, equipped with print heads connected to an ink circuit, designed to receive a second drive signal and configured to apply the ink to the surface of the ceramic product according to a colouring pattern which is a function of the second drive signal;
- a supervision system having a line server and, for each of the machines, namely, feeding machine, pressing machine and colouring machine, a respective local control panel connected to the corresponding machine and a respective print server connected to the corresponding local control panel.

According to this invention, the method comprises the following steps:
- by means of each local control panel, generating configuration data representing a machine setup;
- by means of each print server, receiving the configuration data of the corresponding machine and processing the machine configuration data to generate a machine configuration document representing the machine configuration data formatted according to a predetermined protocol;
- by means of the line server, receiving the configuration documents of the machines of the line and generating a line configuration document representing the setup of the line in its entirety.

In an example embodiment, the method comprises the following further steps:
- by means of a graphical design or development program having a plurality of design functions, reading the line configuration document;
- enabling or inhibiting one or more of the design functions as a function of the check data included in the line configuration document.

In a further example embodiment, the method comprises the following steps:
- by means of the line server, receiving one or more graphical documents representing an aesthetic aspect of the ceramic product;
- generating a drive document representing a recipe for making the ceramic product with the line having the aforesaid setup;
- transmitting to each print server a respective machine drive document representing a recipe part pertaining to the respective machine;
- by means of each print server, generating a drive signal to be transmitted to the local control panel of the corresponding machine.

In a further example embodiment, the method comprises the following step:
- generating an alert signal as a function of the line configuration document, based on a comparison between one or more of the aesthetic features of the ceramic product and the line configuration document.

A further aim of this invention is to provide a processor program comprising a software for performing the steps of the method when run in the production line for making decorated ceramic products. A further aim of this invention is to provide a data storage device readable by a computer containing the processor program.

### Brief description of drawings

This and other features of the invention will become more apparent from the following detailed description of a preferred, non-limiting example embodiment of it, with reference to the single accompanying drawing which schematically represents the production line for making decorated ceramic products according to this description.

### Detailed description of preferred embodiments of the invention

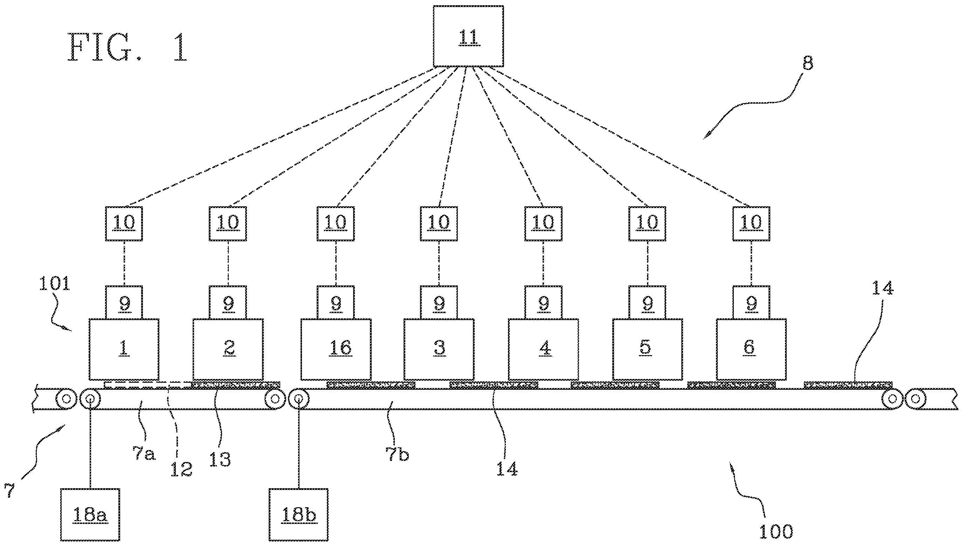

With reference to the drawing, the numeral 100 denotes a production line for making decorated ceramic products.

The line 100 comprises a feeding machine 1 configured to deposit ceramic powders 12 on a conveyor 7 according to a predetermined deposit pattern. The feeding machine 1 is designed to receive a first drive signal to deposit the ceramic powders on the conveyor 7 according to the deposit pattern which is a function of the aforesaid first drive signal.

Preferably, the feeding machine 1 comprises one or more digital dry decoration (DDD) machines. An example of a digital dry decoration machine is described in patent document WO2013045989, in the name of the same Applicant as this invention. The digital dry decoration machine releases small quantities of dry, atomized, granulated or micronized powders of a predetermined colour, preferably by means of a plurality of vibratory, piezoelectrically controlled microdosers.

In one particular embodiment, the one or more digital dry decoration machines are preceded by mass loading systems configured to deposit a layer of base ceramic powder on which coloured ceramic powders are subsequently deposited.

The line 100 comprises a pressing machine 2 configured to compact the ceramic powders 12 deposited by the feeding machine 1 on the conveyor 7 to make a slab 13 of ceramic material having a surface.

Preferably, the pressing machine 2 is a discontinuous hydraulic press or a continuous belt compacting machine. An example of a discontinuous hydraulic press is described in patent document EP0894589, in the name of the same Applicant as this invention. An example of a continuous belt compacting machine is described in patent document EP1283097, in the name of the same Applicant as this invention. It should be noted that the surface of the slab 13 of ceramic material may be smooth or textured, depending on the type of ceramic product required.

Preferably, the pressing machine 2 is equipped with a cutting module configured to separate a slab 13 of ceramic material made by compacting the powders deposited by the feeding machine 1, in order to make a plurality of ceramic products 14, each having a surface. Preferably, the pressing machine 2 is equipped with a distributor module configured to position the ceramic products 14 of the plurality on the conveyor 7 individually according to a predetermined sequence.

It should be noted that the operation of cutting the slabs 13 might be assigned to a cutting machine independent of the pressing machine 2 and positioned downstream thereof. For example, the cutting machine might be located immediately downstream of the pressing machine 2 or downstream of further stations (that is, machines) for glazing and/or firing the ceramic products 14.

It should be noted that the slabs 13 and the respective ceramic products 14 have a surface (which is hereinafter referred to as "decorated surface") which is intended to be machined to obtain a predetermined aesthetic effect. For brevity, the terms "slab 13" and "ceramic product 14" are, unless otherwise specified, used as synonyms hereinafter in this description.

It should also be noted that the term "firing" denotes a set of interdependent thermal cycles which the ceramic products 14 are subjected to, from initial forming to decorated ceramic product. The thermal cycles are typically divided into drying and high-temperature treatment.

The line 100 comprises a colouring machine 4 equipped with print heads connected to an ink circuit. The colouring machine 4 is configured to apply the ink to the decorated surface of the ceramic product 14, according to a predetermined colouring pattern. The colouring machine 4 is designed to receive a second drive signal and configured to apply the ink to the surface of the ceramic product according to a colouring pattern which is a function of the second drive signal.

Preferably, the colouring machine 4 is digital and is equipped with piezoelectrically controlled, high-resolution print heads.

Preferably, the colouring machine 4 is equipped with a multiplicity of print bars (preferably from four to eight). Each print bar is dedicated to a different primary colour to obtain a very wide colour spectrum by combining drops of primary-colour inks.

In one embodiment, the colouring machine 4 is configured to deposit non standard "colours", for example spot tones (predominant colour in the object to be printed), whites, transparent colours. Generally speaking, the machine has a number of colours (and related print bars) which is greater than that used for each product (for example, a total of 8 bars, but only 4-5 in use) so as to allow selecting the best combination of basic colours as a function of the graphic motif and of the predominant colours.

The quantity of ink deposited by the colouring machine 4 is smaller than the quantity if liquid material deposited by the glazing machine 3 and is, for example, between 5 and 50 g/m².

Preferably, the glazing machine 3 is located between the pressing machine 2 and the colouring machine 4.

In an example embodiment, the line 100 comprises a drying machine 16 (that is, a dryer 16) configured to dry the ceramic products 14 (that is, to reduce the content of water in the ceramic products 14 by evaporation). Preferably, the dryer 16 is located between the pressing machine 2 and the glazing machine 3.

In an example embodiment, the dryer 16 is located upstream of a firing kiln configured to subject the ceramic products 14 to the high-temperature treatment. Drying is necessary to reduce the water content of the ceramic products 14 to levels which are compatible with the subsequent high-temperature treatment.

In an example embodiment, the dryer 16 is configured to reduce by evaporation the content of water in the ceramic products 14 from the warehouse.

In an example embodiment, the firing kiln for the high-temperature treatment is located downstream of the colouring machine 4 and of the glazing machine 3.

In an example embodiment, the line 100 comprises a glazing machine 3 configured to deposit liquid material on the decorated surface of the ceramic product 14, according to a predetermined glazing pattern.

The glazing machine 3 is designed to receive a third drive signal and is configured to deposit liquid material on the surface of the ceramic product according to a glazing pattern which is a function of the third drive signal. Preferably, the glazing machine 3 is located between the pressing machine 2 and the colouring machine 4.

Preferably, the glazing machine 3 is a piezoelectrically controlled liquid jet decorating machine. Preferably, the glazing machine 3 comprises printing heads as described in patent EP2085225B1. The glazing machine 3 is capable of applying large quantities of liquid material (on average, from 50 to 500 g/m² and over).

The structure and materials of the printing heads allow the glazing machine 3 to emit drops of liquid material (for example, between 50 and 200 nl in size) from a plurality of nozzles, limiting problems of nozzle blockage and wear. Preferably, the printing heads are equipped with a built-in cleaning system , as described, for example, in patent document EP2085225B1, in the name of the same Applicant as this invention. Preferably, the glazing machine 3 is configured to uniformly cover the entire surface of the ceramic product 14 or to apply the liquid material on some zones of the surface of the ceramic product 14 selectively according to a predetermined, electronically controlled pattern.

Preferably, the glazing machine 3 is configured to make a relief structure by depositing different quantities of liquid material on different zones of the decorated surface of the ceramic product 14.

The liquid material (that is, the glaze) used in the glazing machine 3 consists, for example, of water based ceramic suspensions (for example, characterized by a density greater than or equal to 1500 g/dm³), with solid content of more than 50% (by weight) and particle size greater than or equal to 10 µm. These glazes may be transparent or matt, glossy or satinized in final appearance and, if necessary, may be coloured by adding a colouring pigment to the mix.

To texture the surface, it is possible to use, for example, the same mix of mineral raw materials as a pressed body so as to improve the adhesion and dilatometric match during firing.

In an example embodiment, the line 100 comprises a protective glazing machine 5 configured to apply a protective glaze to the decorated surface of the ceramic product 14, according to a predetermined protective glazing pattern. Preferably, the protective glazing machine 5 is located downstream of the colouring machine 4. The protective glazing machine 5 is designed to receive a fourth drive signal and is configured to apply a protective glaze to the surface of the ceramic product according to a protective glazing pattern which is a function of the fourth drive signal. Preferably, the protective glazing machine 5 is a piezoelectrically controlled liquid jet decorating machine. Preferably, the protective glazing machine 5 is configured to uniformly cover the entire decorated surface of the ceramic product 14 or to apply the protective glaze on some zones of the decorated surface of the ceramic product 14 selectively according to a predetermined, electronically controlled pattern.

Preferably, the protective glazing machine 5 deposits on the surface a large quantity of protective glaze (for example, between 50 and 500 g/m²). Generally speaking, the properties of this protective glaze differ from those of the glaze used by the glazing machine 3. For example, the protective glaze consists of transparent products which, after firing, are, to varying degrees, glossy or metallescent or capable of producing special visual effects on the product surface (brightness, opacity, etc.). Preferably, the protective glazes deposited by the protective glazing machine have functional properties and are capable of increasing the resistance of the ceramic product 14 to wear and chemicals.

In an example embodiment, the line 100 comprises a powder glaze application machine 6, located downstream of the colouring machine 4 and configured to apply a powder glaze to the surface of the ceramic product 14 according to a predetermined powder glaze depositing pattern. The powder glaze application machine 6 is designed to receive a fifth drive signal and is configured to apply a powder glaze to the surface of the ceramic product according to a powder glaze depositing pattern which is a function of the fifth drive signal.

Preferably, the powder glaze application machine 6 is a digital dry decoration machine which allows selective application (by digital means) of powders according to a predetermined powder glazing pattern. The powders may, for example, be grits of glaze, glass, lustre and other materials used to cover the whole or part of the surface. The aesthetic effect differs from that obtained by the protective glazing machine 5 and complements it.

Preferably, the dryer 16 is designed to receive a sixth drive signal and is configured to subject the ceramic product to a heat treatment whose temperature profile is a function of the sixth drive signal. It should be noted that the term "temperature profile" is used to mean the relation between the temperature and the position of a ceramic product in transit through the dryer 16.

Preferably, the firing kiln is designed to receive a seventh drive signal and is configured to subject the ceramic product to a high-temperature heat treatment whose firing temperature profile is a function of the seventh drive signal. It should be noted that the term "firing temperature profile" is used to mean the relation between the temperature and the position of a ceramic product in transit through the firing kiln.

Preferably, the line 100 comprises a first conveyor 7a and a second conveyor 7b.

Preferably, the line 100 is divided into a first working group 101 (or forming unit 101), comprising the feeding machine 1 and the pressing machine 2, and a second working group 100b (or decorating unit 102) comprising the colouring machine 4. Preferably, the second working group also comprises the glazing machine 3, the protective glazing machine 5, the powder glaze application machine 6 and/or the dryer 16.

Preferably, the first working group 101 comprises the first conveyor 7a and the second working group 102 comprises the second conveyor 7b.

Preferably, the line 100 comprises at least one tracking sensor 18 to generate a tracking signal representing a position of the ceramic products 14 moving along the line 100 by means of the conveyor 7. Preferably, the tracking sensor 18 is an encoder system.

In the particular embodiment illustrated, the line 100 comprises at least a first tracking sensor 18a and a second tracking sensor 18b to generate a tracking signal representing a position of the ceramic products moving along the line 100 by means of the first conveyor 7a and the second conveyor 7b, respectively.

The line 100 according to the invention comprises a supervision system 8 configured to electronically manage the operation of the line 100.

The supervision system 8 is designed to process and transmit data and signals from the machines or directed to the machines of the line 100. Preferably, the supervision system 8 is connected to the at least one tracking sensor 18, to receive the tracking signals.

The supervision system 8 comprises a plurality of local control panels 9. Each local control panel 9 is connected to a corresponding machine of the line 100.

Each local control panel 9 comprises a local processor. Preferably, each local control panel 9 comprises a local memory.

In an example embodiment, the ceramic powders 12 are deposited according to a pattern determined by an image stored in the memory of the local control panel 9. Preferably, the image is uniquely associated with a ceramic product in process of production.

It should be noted that the term "processor" generally denotes an electronic component used to process data or signals. The processor may be embodied by a computer (or part of a computer such as, for example, a suitably programmed CPU), a PLC an electronic card or other electronic tools ((hardware or software) of essentially known type.

Each local control panel 9 is programmed to acquire (and preferably memorize) for each of the corresponding machines of the line 100, a plurality of operating parameters relating to the operation of the corresponding machine. Each local control panel 9 is configured to generate configuration data representing a setup of the corresponding machine.

Preferably, each local panel 9 is programmed to acquire and memorize, for a corresponding machine of the line 100, a variation of the set of configuration data in an operating time interval of the line 100.

For example, the configuration data comprises values representing a number of print bars of a colouring machine 4 or values representing a type of colour the print bars are loaded with.

In this description, the term "machine setup" is used to mean a set of data representing all the possible operating configurations of the machine itself. In other words, the term "machine setup" denotes a data set representing all the possible machine settings.

The supervision system 8 comprises a plurality of print servers 10. Each print server 10 is connected to a corresponding local control panel 9 to receive the configuration data of the corresponding machine and process it to generate a machine configuration document representing the configuration data of the machine itself, formatted according to a predetermined protocol.

According to this invention, the line 100 comprises a line server 11. The line server 11 is connected to all the print servers 10 of the line 100 to receive the configuration documents of the machines of the line 100. The line server 11 is configured to generate a configuration document of the line 100, representing a setup of the line 100 in its entirety. In this description, the term "setup of the line 100" is used to mean a set of data representing all the possible operating configurations of the line 100 itself. In other words, the term "setup of the line 100" denotes a data set representing all the possible settings of the line 100.

Preferably, the print server 10 and the local control panel 9 define distinct devices which can be spaced from one another. Preferably, data transmission between each local control panel 9 and the respective print server 10 is wireless. In other words, each local control panel 9 is connected to the respective print server 10 by a Wi-Fi connection.

In an example embodiment, the line server 11 is configured to generate of the line 100 a configuration document which can be read by a graphical design or development program.

It should be noted that the term "graphical design or development program" is used to mean a processor program configured to design a ceramic product 14 as regards both its geometrical (or dimensional) aspect and the aesthetic aspect of its decorated surface. Hereinafter in this description, the term "aesthetic aspect" of the ceramic product 14 refers to both the geometrical features of the ceramic product 14 and to the aesthetic features of its decorated surface.

In an example embodiment, the line server 11 is configured to receive one or more graphical documents representing an aesthetic aspect of the ceramic product 14. Preferably, the line server 11 is configured to generate a drive document representing a recipe for making the ceramic product 14 with a line 100 having the aforesaid setup.

It should be noted that the term "recipe" is used to denote a data set representing settings of the machines of the line 100 to make a ceramic product having a given aesthetic aspect. The recipe comprises a data set representing settings of the machines of the line 100 to make the ceramic product 14 and is therefore a subset of the setup of the line 100.

In an example embodiment, the line server 11 is configured to transmit to the print servers 10 respective machine drive documents representing a recipe subset pertaining to the respective machine. In other words, each machine drive document comprises a set of machine settings selected from the possible settings of the machine setup. The print servers 10 are designed to receive the machine drive documents to generate corresponding drive signals to be transmitted to the corresponding machine. Preferably, each print server 10 has its own data storage memory.

In an example embodiment, the supervision system 8 is configured to memorize the firing temperature profile typical of each product in order to generate the seventh drive signal as a function of the firing temperature profile and to transmit the seventh drive signal to the firing kiln.

In other words, the supervision system 8 is configured to transmit to the machines of the line 100, automatically (and preferably simultaneously) the corresponding drive signals in order to configure a setting thereof by means of the respective machine drive documents.

In an example embodiment, the line server 11 is configured to enter check data in the configuration document of the line 100. In a graphical development and design program having a plurality of design functions, the check data is used to enable or inhibit one or more of those design functions.

In other words, by reading the check data, the graphical development and design program analyses the capability of the line 100 having a given line setup (that is, the types of ceramic product 14 which the line 100 is able to make), to enable or disable design functions according to what the line 100 is capable of making.

In a further example embodiment, the line server 11 is configured to receive one or more graphical documents representing an aesthetic aspect of the ceramic product 14. The line server 11 is configured to generate an alert signal based on a comparison between one or more of the aesthetic features of the ceramic product 14 and the line configuration document. In other words, the line server 11 is configured to alert a user if the line 100, having a certain setup of the line 100, is not capable of making a ceramic product 14. The aesthetic aspect of the ceramic product 14 is represented by the data contained in these graphical documents. Also defined according to this description is a method for the continuous cycle production of decorated ceramic products 14 in a line 100 comprising:
- a feeding machine 1 designed to receive a first drive signal and configured to deposit ceramic powders 12 on a conveyor according to a deposit pattern which is a function of the first drive signal;
- a pressing machine 2 configured to compact the powders 12 deposited by the feeding machine 1 to make ceramic products 14 having a surface;
- a colouring machine 4, equipped with print heads connected to an ink circuit, designed to receive a second drive signal and configured to apply the ink to the surface of the ceramic product 14 according to a colouring pattern which is a function of the second drive signal;
- a supervision system 8 having a line server 11 and, for each of the machines, namely, feeding machine 1, pressing machine 2 and colouring machine 4, a respective local control panel 9 connected to the corresponding machine and a respective print server 10 connected to the corresponding local control panel 9.

According to this invention, the method comprises the following steps:
- by means of each local control panel 9, generating configuration data representing a setup for the corresponding machine;
- by means of each print server 10, receiving the configuration data of the corresponding machine and processing the configuration data to generate a machine configuration document representing the machine configuration data formatted according to a predetermined protocol;
- by means of the line server 11, receiving the configuration documents of the machines of the line 100 and generating a configuration document of the line 100, representing the setup of the line 100 in its entirety.

In an example embodiment, the method comprises the following further steps:
- by means of a graphical design or development program having a plurality of design functions, reading the configuration document of the line 100;
- enabling or inhibiting one or more of the design functions as a function of the check data included in the configuration document of the line 100.

In a further example embodiment, the method comprises the following steps:
- by means of the line server 11, receiving one or more graphical documents representing an aesthetic aspect of the ceramic product 14;
- generating a drive document representing a recipe for making the ceramic product 14 with the line having the aforesaid setup;
- transmitting to each print server 10 a respective machine drive document representing a recipe part pertaining to the respective machine;
- by means of each print server 10, generating a drive signal to be transmitted to the local control panel of the corresponding machine.

In a further example embodiment, the method comprises the following step:
- generating an alert signal based on a comparison between one or more of the aesthetic features of the ceramic product 14 and the configuration document of the line 100.

A further aim of this invention is to provide a processor program comprising a software for performing the steps of the method when run in the production line 100 of this description for making decorated ceramic products. A further aim of this invention is to provide a data storage device readable by a computer containing the processor program.

## Claims

1. A continuous cycle production line (100) for making decorated ceramic products, comprising:
- a feeding machine (1) designed to receive a first drive signal and configured to deposit ceramic powders (12) on a conveyor according to a deposit pattern which is a function of the first drive signal;
- a pressing machine (2) configured to compact the powders (12) deposited by the feeding machine (1) to make ceramic products having a surface;
- a colouring machine (4), equipped with print heads connected to an ink circuit, designed to receive a second drive signal and configured to apply the ink to the surface of the ceramic product (14) according to a colouring pattern which is a function of the second drive signal;
wherein it comprises a supervision system (8) having a line server (11); **characterized in that** it comprises for each of the machines, namely, feeding machine (1), pressing machine (2) and colouring machine (4):
- a respective local control panel (9) connected to the corresponding machine and configured to generate configuration data representing a machine setup;
- a print server (10), connected to a corresponding local control panel (9) to receive the configuration data of the corresponding machine and process it to generate a machine configuration document representing the machine configuration data formatted according to a predetermined protocol,
wherein the line server (11) is connected to all the print servers (10) of the line (100) to receive the configuration documents of the machines of the line (100) and is configured to generate a configuration document of the line (100), representing the setup of the line (100) in its entirety.

2. The line (100) according to claim 1, wherein the configuration document of the line (100) is readable by a graphical design or development program.

3. The line (100) according to claim 1 or 2, wherein the line server (11) is configured to receive one or more graphical documents representing an aesthetic aspect of the ceramic product (14) and to generate a drive document representing a recipe, where the recipe comprises a data set representing settings of the machines of the line (100), in order to make the ceramic product (14) with a line (100) having the aforesaid setup.

4. The line (100) according to claim 3, wherein the line server (11) is configured to transmit to the print serves (10) respective machine drive documents representing a recipe subset pertaining to the respective machine, wherein the print servers (10) are designed to receive the respective machine drive documents to generate the corresponding drive signals to be transmitted to the corresponding machine.

5. The line (100) according to any one of the preceding claims, wherein each print server (10) has its own data storage memory.

6. The line (100) according to any one of claims 2 to 5, wherein the line server (11) is configured to enter check data in the configuration document of the line (100), the check data being used, in a graphical development and design environment having a plurality of design functions, to enable or inhibit one or more of those design functions.

7. The line (100) according to any one of the preceding claims, wherein the line server (11) is configured to receive one or more graphical documents representing an aesthetic aspect of the ceramic product (14) and is configured to generate an alert signal as a function of the configuration document of the line (100), based on a comparison between one or more of the aesthetic features of the ceramic product (14) and the configuration document of the line (100).

8. The line according to any one of the preceding claims, comprising one or more of the following machines:
- a glazing machine (3), located between the pressing machine (2) and the colouring machine (4), designed to receive a third drive signal and configured to deposit liquid material on the surface of the ceramic product (14), according to a glazing pattern as a function of the third drive signal;
- a protective glazing machine (5), located downstream of the colouring machine (4), designed to receive a fourth drive signal and configured to apply a protective glaze to the surface of the ceramic product coloured by the colouring machine (4), according to a protective glazing pattern as a function of the fourth drive signal;
- a powder glaze application machine (6), located downstream of the colouring machine (4), designed to receive a fifth drive signal and configured to apply a powder glaze to the surface of the ceramic product coloured by the colouring machine (4) according to a powder glaze depositing pattern as a function of the fifth drive signal;
- a dryer (16), located between the pressing machine (2) and the glazing machine (3), designed to receive a sixth drive signal and configured to subject the ceramic product to a heat treatment whose temperature profile is a function of the sixth drive signal,
and having, for each of these one or more machines, namely, glazing machine (3), protective glazing machine (5), powder glaze application machine (6) or dryer (16):
- a respective local control panel (9) connected to the corresponding machine and configured to generate configuration data representing a machine setup;
- a respective print server (10), connected to a corresponding local control panel (9) to receive the configuration data of the corresponding machine and process it to generate a machine configuration document representing the machine configuration data formatted according to a predetermined protocol.

9. The line (100) according to any one of the preceding claims, wherein the print server (10) and the local control panel (9) define distinct devices which can be spaced from one another.

10. A continuous cycle production method for making decorated ceramic products in a line comprising:
- a feeding machine (1) designed to receive a first drive signal and configured to deposit ceramic powders (12) on a conveyor according to a deposit pattern which is a function of the first drive signal;
- a pressing machine (2) configured to compact the powders (12) deposited by the feeding machine (1) to make ceramic products (14) having a surface;
- a colouring machine (4), equipped with print heads connected to an ink circuit, designed to receive a second drive signal and configured to apply the ink to the surface of the ceramic product according to a colouring pattern which is a function of the second drive signal;
- a supervision system having a line server **characterized in that** it comprises for each of the machines,
namely, feeding machine (1), pressing machine (2) and colouring machine (4), a respective local control panel (9) connected to the corresponding machine and a respective print server (10) connected to the corresponding local control panel (9);
wherein the method comprises the following steps:
- by means of each local control panel (9), generating configuration data representing a machine setup;
- by means of each print server, receiving the configuration data of the corresponding machine and processing the machine configuration data to generate a machine configuration document representing the machine configuration data formatted according to a predetermined protocol;
- by means of the line server (11), receiving the configuration documents of the machines of the line (100) and generating a configuration document of the line (100), representing the setup of the line (100) in its entirety.

11. The method according to claim 10, comprising the following steps:
- by means of a graphical design or development program having a plurality of design functions, reading the configuration document of the line (100);
- enabling or inhibiting one or more of the design functions as a function of the check data included in the line configuration document.

12. The method according to claim 10 or 11, comprising the following further steps:
- by means of the line server (11), receiving one or more graphical documents representing an aesthetic aspect of the ceramic product (14);
- generating a drive document representing a recipe for making the ceramic product (14) with the line (100) having the aforesaid setup;
- transmitting to each print server a respective machine drive document representing a recipe part pertaining to the respective machine;
- by means of each print server (10), generating a drive signal to be transmitted to the local control panel (9) of the corresponding machine;
- generating an alert signal as a function of the configuration document of the line (100), based on a comparison between one or more of the aesthetic features of the ceramic product (14) and the configuration document of the line (100).

13. A processor program comprising a software for performing the steps of the method according to any one of claims 10 to 12 when run in the production line (100) according to any one of claims 1 to 9.

14. A data storage device readable by a computer containing the processor program according to claim 13.

## Patentansprüche

1. Anlage für kontinuierliche Produktion (100) zur Herstellung verzierter Keramikprodukte, umfassend:
- eine Beschickungsmaschine (1), die ausgestaltet ist, um ein erstes Antriebssignal zu empfangen und die ausgelegt ist, um Keramikpulver (12) auf einem Förderer nach einem Ablagemuster abzulegen, das eine Funktion des ersten Antriebssignals ist;
- eine Pressmaschine (2), die ausgelegt ist, um das von der Beschickungsmaschine (1) abgelegte Pulver (12) zur Herstellung von Keramikprodukten, aufweisend eine Oberfläche, zu verdichten;
- eine Färbungsmaschine (4), die mit Druckköpfen ausgestattet ist, verbunden mit einem Tintenkreislauf, ausgestaltet, um ein zweites Antriebssignal zu empfangen und die ausgelegt ist, um die Tinte auf der Oberfläche des Keramikprodukts (14) nach einem Färbungsmuster als eine Funktion des zweiten Antriebssignals aufzutragen, wobei sie ein Überwachungssystem (8) umfasst, aufweisend einen Anlagenserver (11), **dadurch gekennzeichnet, dass** sie für eine jede der Maschinen, d. h. die Beschickungsmaschine (1), die Pressmaschine (2) und die Färbungsmaschine (4), Folgendes umfasst:
- ein jeweiliges lokales Bediengerät (9), das mit der entsprechenden Maschine verbunden und ausgelegt ist, um Auslegungsdaten zu generieren, die eine Maschinenkonfiguration darstellen;
- einen Druckserver (10), der mit einem entsprechenden lokalen Bediengerät (9) verbunden ist, um die Auslegungsdaten der entsprechenden Maschine zu empfangen und zu verarbeiten, um ein Maschinenauslegungsdokument zu generieren, das die Maschinenauslegungsdaten darstellt, formatiert nach einem vorgegebenen Protokoll, wobei der Anlagenserver (11) mit allen Druckservern (10) der Anlage (100) verbunden ist, um die Auslegungsdokumente der Maschinen der Anlage (100) zu empfangen, und ausgelegt ist, um ein Auslegungsdokument der Anlage (100) zu generieren, das die Konfiguration der Anlage (100) in ihrer Gesamtheit darstellt.

2. Anlage (100) nach Anspruch 1, wobei das Auslegungsdokument der Anlage (100) von einem grafischen Gestaltungs- oder einem Entwicklungsprogramm lesbar ist.

3. Anlage (100) nach Anspruch 1 oder 2, wobei der Anlagenserver (11) ausgelegt ist, um ein oder mehrere grafische Dokumente zu empfangen, die einen ästhetischen Aspekt des Keramikprodukts (14) darstellen, und um ein Antriebsdokument zu generieren, das ein Rezept darstellt, wobei das Rezept einen Datensatz umfasst, der Einstellungen der Maschinen der Anlage (100) darstellt, um das Keramikprodukt (14) mit einer Anlage (100), aufweisend die oben genannte Konfiguration, herzustellen.

4. Anlage (100) nach Anspruch 3, wobei der Anlagenserver (11) ausgelegt ist, um an die Druckserver (10) jeweilige Maschinenantriebsdokumente zu übermitteln, die einen zur jeweiligen Maschine gehörenden Rezeptteilsatz darstellen, wobei die Druckserver (10) ausgestaltet sind, um die jeweiligen Maschinenantriebsdokumente zu empfangen, um die entsprechenden Antriebssignale zu generieren, die an die entsprechende Maschine zu übermitteln sind.

5. Anlage (100) nach einem der vorhergehenden Ansprüche, wobei ein jeder Druckserver (10) seinen eigenen Datenspeicher aufweist.

6. Anlage (100) nach einem der Ansprüche 2 bis 5, wobei der Anlagenserver (11) ausgelegt ist, um Prüfdaten in das Auslegungsdokument der Anlage (100) einzugeben, wobei die Prüfdaten in einer grafischen Entwicklungs- und Gestaltungsumgebung, aufweisend eine Vielzahl von Gestaltungsfunktionen, genutzt werden, um eine oder mehrere dieser Gestaltungsfunktionen freizugeben oder zu hemmen.

7. Anlage (100) nach einem der vorhergehenden Ansprüche, wobei der Anlagenserver (11) ausgelegt ist, um ein oder mehrere grafische Dokumente zu empfangen, die einen ästhetischen Aspekt des Keramikprodukts (14) darstellen, und ausgelegt ist, um ein Warnsignal als eine Funktion des Auslegungsdokuments der Anlage (100) zu generieren, basierend auf einem Vergleich zwischen einem oder mehreren der ästhetischen Merkmale des Keramikprodukts (14) und dem Auslegungsdokument der Anlage (100).

8. Anlage nach einem der vorhergehenden Ansprüche, umfassend eine oder mehrere der folgenden Maschinen:
- eine Glasurmaschine (3), die zwischen der Pressmaschine (2) und der Färbungsmaschine (4) angeordnet und ausgestaltet ist, um ein drittes Antriebssignal zu empfangen, und die ausgelegt ist, um flüssiges Material auf der Oberfläche des Keramikprodukts (14) nach einem Glasurmuster als eine Funktion des dritten Antriebssignals abzulegen;
- eine Schutzglasurmaschine (5), die nach der Färbungsmaschine (4) angeordnet und ausgestaltet ist, um ein viertes Antriebssignal zu empfangen, und die ausgelegt ist, um eine Schutzglasur auf der Oberfläche des durch die Färbungsmaschine (4) gefärbten Keramikprodukts nach einem Schutzglasurmuster als eine Funktion des vierten Antriebssignals aufzubringen;
- eine Pulverglasuraufbringungsmaschine (6), die nach der Färbungsmaschine (4) angeordnet und ausgestaltet ist, um ein fünftes Antriebssignal zu empfangen, und die ausgelegt ist, um eine Pulverglasur auf der Oberfläche des durch die Färbungsmaschine (4) gefärbten Keramikprodukts nach einem Pulverglasurmuster als eine Funktion des fünften Antriebssignals aufzubringen;
- einen Trockner (16), der zwischen der Pressmaschine (2) und der Glasurmaschine (3) angeordnet und ausgestaltet ist, um ein sechstes Antriebssignal zu empfangen, und der ausgelegt ist, um das Keramikprodukt einer Wärmebehandlung zu unterziehen, deren Temperaturprofil eine Funktion des sechsten Antriebssignals ist,
und aufweisend für eine jede dieser einen oder mehr Maschinen, d. h. die Glasurmaschine (3), die Schutzglasurmaschine (5), der Pulverglasuraufbringungsmaschine (6) oder den Trockner (16) :
- ein jeweiliges lokales Bediengerät (9), das mit der entsprechenden Maschine verbunden und ausgelegt ist, um Auslegungsdaten zu generieren, die eine Maschinenkonfiguration darstellen;
- einen jeweiligen Druckserver (10), der mit einem entsprechenden lokalen Bediengerät (9) verbunden ist, um die Auslegungsdaten der entsprechenden Maschine zu empfangen und zu verarbeiten, um ein Maschinenauslegungsdokument zu generieren, das die Maschinenauslegungsdaten darstellt, formatiert nach einem vorgegebenen Protokoll.

9. Anlage (100) nach einem der vorhergehenden Ansprüche, wobei der Druckserver (10) und das lokale Bediengerät (9) unterschiedliche Geräte definieren, die voneinander beabstandet sein können.

10. Verfahren für kontinuierliche Produktion zur Herstellung verzierter Keramikprodukte in einer Anlage, umfassend:
- eine Beschickungsmaschine (1), die ausgestaltet ist, um ein erstes Antriebssignal zu empfangen und die ausgelegt ist, um Keramikpulver (12) auf einem Förderer nach einem Ablagemuster abzulegen, das eine Funktion des ersten Antriebssignals ist;
- eine Pressmaschine (2), die ausgelegt ist, um das von der Beschickungsmaschine (1) abgelegte Pulver (12) zur Herstellung von Keramikprodukten (14), aufweisend eine Oberfläche, zu verdichten;
- eine Färbungsmaschine (4), die mit Druckköpfen ausgestattet ist, verbunden mit einem Tintenkreislauf, ausgestaltet, um ein zweites Antriebssignal zu empfangen und ausgelegt, um die Tinte auf der Oberfläche des Keramikprodukts nach einem Färbungsmuster als eine Funktion des zweiten Antriebssignals aufzutragen;
- ein Überwachungssystem, aufweisend einen Anlagenserver, **dadurch gekennzeichnet, dass** sie für eine jede der Maschinen, d. h. die Beschickungsmaschine (1), die Pressmaschine (2) und die Färbungsmaschine (4), ein jeweiliges lokales Bediengerät (9) umfasst, das mit der entsprechenden Maschine verbunden ist, und ein jeweiliger Druckserver (10), der mit dem entsprechenden lokalen Bediengerät (9) verbunden ist,
wobei das Verfahren die folgenden Schritte umfasst:
- Generieren von Auslegungsdaten, die eine Maschinenkonfiguration darstellen, mittels eines jeden lokalen Bediengeräts (9);
- Empfangen der Auslegungsdaten der entsprechenden Maschine mittels eines jeden Druckservers und Verarbeiten der Maschinenauslegungsdaten, um ein Maschinenauslegungsdokument zu generieren, das die Maschinenauslegungsdaten darstellt, formatiert nach einem vorgegebenen Protokoll;
- Empfangen des Auslegungsdokuments der Maschinen der Anlage (100) mittels des Anlagenservers (11) und Generieren eines Auslegungsdokuments der Anlage (100), darstellend die Konfiguration der Anlage (100) in ihrer Gesamtheit.

11. Verfahren nach Anspruch 10, umfassend die folgenden Schritte:
- Lesen des Auslegungsdokuments der Anlage (100) mittels eines grafischen Gestaltungs- oder Entwicklungsprogramms, aufweisend eine Vielzahl von Gestaltungsfunktionen;
- Freigeben oder Hemmen von einer oder mehreren der Gestaltungsfunktionen als eine Funktion der Prüfdaten, die im Anlagenauslegungsdokument eingeschlossen sind.

12. Verfahren nach Anspruch 10 oder 11, umfassend die folgenden weiteren Schritte:
- Empfangen von einem oder mehreren grafischen Dokumente, darstellend einen ästhetischen Aspekt des Keramikprodukts (14), mittels des Anlagenservers (11);
- Generieren eines Antriebsdokuments, darstellend ein Rezept zur Herstellung des Keramikprodukts (14) mit der Anlage (100), aufweisend die oben genannte Konfiguration;
- Übermitteln eines jeweiligen Maschinenantriebsdokuments, darstellend einen zur jeweiligen Maschine gehörenden Rezeptteil, an einen jeden Druckserver;
- Generieren eines an das lokale Bediengerät (9) der entsprechenden Maschine zu übermittelnden Antriebssignals mittels eines jeden Druckservers (10);
- Generieren eines Warnsignals als eine Funktion des Auslegungsdokuments der Anlage (100), basierend auf einem Vergleich zwischen einem oder mehreren der ästhetischen Merkmale des Keramikprodukts (14) und dem Auslegungsdokument der Anlage (100).

13. Prozessorprogramm, umfassend eine Software für die Durchführung der Schritte des Verfahrens nach einem der Ansprüche 10 bis 12, wenn in der Produktionsanlage (100) nach einem der Ansprüche 1 bis 9 ausgeführt.

14. Datenspeichervorrichtung, die von einem Computer lesbar ist, enthaltend das Prozessorprogramm nach Anspruch 13.

## Revendications

1. Chaîne de production à cycle continu (100) de produits céramiques décorés, comprenant :
- une machine d'alimentation (1) conçue pour recevoir un premier signal de commande et configurée pour déposer des poudres céramiques (12) sur un convoyeur selon un modèle de dépôt qui est une fonction du premier signal de commande ;
- une machine de pressage (2) configurée pour compacter les poudres (12) déposées par la machine d'alimentation (1) de produits céramiques ayant une surface ;
- une machine de coloration (4), équipée de têtes d'impression reliées à un circuit d'encre, conçue pour recevoir un second signal de commande et configurée pour appliquer l'encre sur la surface du produit céramique (14) selon un motif de coloration qui est fonction du second signal de commande ;
dans laquelle elle comprend un système de supervision (8) ayant un serveur de chaîne (11) ; **caractérisée en ce qu'**elle comprend pour chacune des machines, à savoir, une machine d'alimentation (1), une machine de pressage (2) et une machine de coloration (4) :
- un panneau de commande local respectif (9) connecté à la machine correspondante et configuré pour générer des données de configuration représentant un réglage de la machine ;
- un serveur d'impression (10), connecté à un panneau de commande local correspondant (9) pour recevoir les données de configuration de la machine correspondante et les traiter pour générer un document de configuration de machine représentant les données de configuration de machine formatées selon un protocole prédéterminé,
dans laquelle le serveur de chaîne (11) est connecté à tous les serveurs d'impression (10) de la chaîne (100) pour recevoir les documents de configuration des machines de la chaîne (100) et est configuré pour générer un document de configuration de la chaîne (100), représentant le réglage de la chaîne (100) dans son intégralité.

2. Chaîne (100) selon la revendication 1, dans laquelle le document de configuration 3 o de la chaîne (100) est lisible par un programme de conception ou de développement graphique.

3. Chaîne (100) selon la revendication 1 ou 2, dans laquelle le serveur de chaîne (11) est configuré pour recevoir un ou plusieurs documents graphiques représentant un aspect esthétique du produit céramique (14) et pour générer un document de commande représentant une recette, où la recette comprend un ensemble de données représentant des paramètres des machines de la chaîne (100), afin de fabriquer le produit céramique (14) avec une chaîne (100) ayant le réglage susmentionnée.

4. Chaîne (100) selon la revendication 3, dans laquelle le serveur de chaîne (11) est configuré pour transmettre aux serveurs d'impression (10) des documents de commande de machine respectifs représentant un sous-ensemble de recettes se rapportant à la machine respective, dans laquelle les serveurs d'impression (10) sont conçus pour recevoir les documents de commande de machine respectifs pour générer les signaux de commande correspondants à transmettre à la machine correspondante.

5. Chaîne (100) selon l'une quelconque des revendications précédentes, dans laquelle chaque serveur d'impression (10) possède sa propre mémoire de stockage de données.

6. Chaîne (100) selon l'une quelconque des revendications 2 à 5, dans laquelle le serveur de chaîne (11) est configuré pour entrer des données de vérification dans le document de configuration de la chaîne (100), les données de vérification étant utilisées, dans un environnement de développement et de conception graphique ayant une pluralité de fonctions de conception, pour activer ou inhiber une ou plusieurs de ces fonctions de conception.

7. Chaîne (100) selon l'une quelconque des revendications précédentes, dans laquelle le serveur de chaîne (11) est configuré pour recevoir un ou plusieurs documents graphiques représentant un aspect esthétique du produit céramique (14) et est configuré pour générer un signal d'alerte en fonction du document de configuration de la chaîne (100), sur la base d'une comparaison entre une ou plusieurs des caractéristiques esthétiques du produit céramique (14) et le document de configuration de la chaîne (100).

8. Chaîne selon l'une quelconque des revendications précédentes, comprenant une ou plusieurs des machines suivantes :
- une machine à émailler (3), située entre la machine de pressage (2) et la machine de coloration (4), conçue pour recevoir un troisième signal de commande et configurée pour déposer un matériau liquide sur la surface du produit céramique (14), selon un motif d'émaillage en fonction du troisième signal de commande ;
- une machine à émailler de protection (5), située en aval de la machine de coloration (4), conçue pour recevoir un quatrième signal de commande et configurée pour appliquer un émaillage de protection sur la surface du produit céramique coloré par la machine de coloration (4), selon un motif d'émaillage de protection en fonction du quatrième signal de commande ;
- une machine d'application d'émail en poudre (6), située en aval de la machine de coloration (4), conçue pour recevoir un cinquième signal de commande et configurée pour appliquer un émail en poudre sur la surface du produit céramique coloré par la machine de coloration (4) selon un modèle de dépôt d'émail en poudre en fonction du cinquième signal de commande ;
- un séchoir (16), situé entre la machine de pressage (2) et la machine à émailler (3), conçu pour recevoir un sixième signal de commande et configuré pour soumettre le produit céramique à un traitement thermique dont le profil de température est fonction du sixième signal de commande,
et comportant, pour chacune de ces une ou plusieurs machines, à savoir, machine à émailler (3), machine à émailler de protection (5), machine d'application d'émail en poudre (6) ou séchoir (16) :
- un panneau de commande local respectif (9) connecté à la machine correspondante et configuré pour générer des données de configuration représentant un réglage de la machine ;
- un serveur d'impression respectif (10), connecté à un panneau de commande local correspondant (9) pour recevoir les données de configuration de la machine correspondante et les traiter pour générer un document de configuration de la machine représentant les données de configuration de la machine formatées selon un protocole prédéterminé.

9. Chaîne (100) selon l'une quelconque des revendications précédentes, dans laquelle le serveur d'impression (10) et le panneau de commande local (9) définissent des dispositifs distincts qui peuvent être espacés les uns des autres.

10. Procédé de production à cycle continu de produits céramiques décorés dans une chaîne, comprenant :
- une machine d'alimentation (1) conçue pour recevoir un premier signal de commande et configurée pour déposer des poudres céramiques (12) sur un convoyeur selon un modèle de dépôt qui est une fonction du premier signal de commande ;
- une machine de pressage (2) configurée pour compacter les poudres (12) déposées par la machine d'alimentation (1) de produits céramiques (14) ayant une surface ;
- une machine de coloration (4), équipée de têtes d'impression reliées à un circuit d'encre, conçue pour recevoir un second signal de commande et configurée pour appliquer l'encre sur la surface du produit céramique selon un motif de coloration qui est fonction du second signal de commande ;
- un système de supervision ayant un serveur de chaîne, **caractérisé en ce qu'**elle comprend pour chacune des machines, à savoir, une machine d'alimentation (1), une machine de pressage (2) et une machine de coloration (4), un panneau de commande local respectif (9) connecté à la machine correspondante et un serveur d'impression respectif (10) connecté au panneau de commande local correspondant (9) ;
dans lequel le procédé comprend les étapes suivantes :
- au moyen de chaque panneau de commande local (9), générer des données de configuration représentant un réglage de la machine ;
- au moyen de chaque serveur d'impression, recevoir les données de configuration de la machine correspondante et traiter les données de configuration de la machine pour générer un document de configuration de la machine représentant les données de configuration de la machine formatées selon un protocole prédéterminé ;
- au moyen du serveur de chaîne (11), recevoir les documents de configuration des machines de la chaîne (100) et générer un document de configuration de la chaîne (100), représentant le réglage de la chaîne (100) dans son intégralité.

11. Procédé selon la revendication 10, comprenant les étapes suivantes :
- au moyen d'un programme de conception ou de développement graphique ayant une pluralité de fonctions de conception, lire le document de configuration de la chaîne (100) ;
- activer ou inhiber une ou plusieurs des fonctions de conception en fonction des données de vérification incluses dans le document de configuration de chaîne.

12. Procédé selon les revendications 10 ou 11, comprenant les étapes supplémentaires suivantes :
- au moyen du serveur de chaîne (11), recevoir un ou plusieurs documents graphiques représentant un aspect esthétique du produit céramique (14) ;
- générer un document de commande représentant une recette pour fabriquer le produit céramique (14) avec la chaîne (100) ayant le réglage susmentionné ;
- transmettre à chaque serveur d'impression un document de commande de machine respectif représentant une partie de recette se rapportant à la machine respective ;
- au moyen de chaque serveur d'impression (10), générer un signal de commande à transmettre au panneau de commande local (9) de la machine correspondante ;
- générer un signal d'alerte en fonction du document de configuration de la chaîne (100), sur la base d'une comparaison entre une ou plusieurs des caractéristiques esthétiques du produit céramique (14) et le document de configuration de la chaîne (100).

13. Programme de processeur comprenant un logiciel pour réaliser les étapes du procédé selon l'une quelconque des revendications 10 à 12 lorsqu'il est exécuté dans la chaîne de production (100) selon l'une quelconque des revendications 1 à 9.

14. Dispositif de stockage de données lisible par un ordinateur contenant le programme de processeur selon la revendication 13.
